# EUROPÄISCHE PATENTSCHRIFT

(11) **EP 3 347 904 B1**
(45) Veröffentlichungstag und Bekanntmachung des Hinweises auf die Patenterteilung: **28.08.2019**
(21) Anmeldenummer: 16798653.8
(22) Anmeldetag: 27.10.2016
(51) Int. Cl.: H01B 13/16, B29C 70/74, B29C 64/135, B33Y 10/00, H01B 13/14, H01B 3/00

(54) **VERFAHREN ZUR UMMANTELUNG EINES STRANGGUTS, VORRICHTUNG FÜR DAS VERFAHREN UND COMPUTERPROGRAMMPRODUKT**
METHOD FOR SHEATHING A PRODUCT IN STRAND FORM, APPARATUS FOR THE METHOD AND COMPUTER PROGRAM PRODUCT
PROCÉDÉ D'ENROBAGE D'UN TORON, DISPOSITIF POUR LE PROCÉDÉ ET PRODUIT-PROGRAMME D'ORDINATEUR

(30) Priorität: 28.10.2015 DE 102015221102
(43) Veröffentlichungstag der Anmeldung: 18.07.2018
(73) Patentinhaber: LEONI Kabel GmbH, 90402 Nürnberg (DE)
(72) Erfinder: HITZ, Bastian, 92353 Postbauer-Heng (DE); WONG, Fuk-Ting, 11147 Taipei City (TW)
(74) Vertreter: FDST Patentanwälte
(86) Internationale Anmeldenummer: PCT/EP2016/075996
(87) Internationale Veröffentlichungsnummer: WO 2017/072263

(56) Entgegenhaltungen:
- DE-A1- 4 102 257
- US-A1- 2015 097 316

## Beschreibung

Die Erfindung betrifft ein Verfahren, insbesondere zur Herstellung eines Kabels, eine Vorrichtung für das Verfahren, sowie ein Computerprogrammprodukt.

Zur Fertigung von Kabeln sind grundsätzlich Extrusionsverfahren bekannt, bei denen auf ein Stranggut, das einem Extrusionskopf zugeführt wird, ein Mantel aufextrudiert wird. Das hierzu notwendige Material wird dem Extrusionskopf über einen Extruder bereitgestellt. Extrusionsverfahren zeichnen sich üblicherweise durch eine hohe Fertigungsgeschwindigkeit aus, bieten jedoch lediglich wenige Möglichkeiten zur Gestaltung des Mantels, insbesondere dessen Form und Kontur.

Zur Herstellung besonders komplexer Strukturen ist die Verwendung eines 3D-Herstellungsverfahrens möglich, welches sich durch eine hohe Gestaltbarkeit des herzustellenden Gegenstands auszeichnet. Beispielsweise ist in der US 5,236,637 ein stereolithographisches System beschrieben, mittels dessen ein dreidimensionales Objekt aus einem flüssigen Material schichtweise durch sukzessives Aushärten mehrerer übereinanderliegender Schichten mittels Belichtung gefertigt wird. Solche Verfahren weisen jedoch häufig eine lediglich geringe Fertigungsgeschwindigkeit auf, jedenfalls im Vergleich zu oben genannten Extrusionsverfahren, werden daher üblicherweise im Bereich des Rapid-Prototyping eingesetzt und sind nur bedingt zur Serien- oder Endlosfertigung geeignet.

Ein besonders schnelles 3D-Herstellungsverfahren wird dagegen beispielsweise in der US 2015/0097316 A1 beschrieben und ermöglicht eine kontinuierliche Fertigung anstelle einer schichtweisen Fertigung. Dazu wird eine Überlagerung zweier Gradienten ausgenutzt, welche zur Ausbildung einer dünnen Aufbauzone im auszuhärtenden Material führt. Wesentlich ist hierbei das Einbringen eines Inhibitors in das Material, welcher bereichsweise ein Aushärten durch die Belichtung verhindert.

Das Dokument DE 4102257 A1 offenbart eine Vorrichtung zur Herstellung beliebig geformter Kunststoffkörper, wobei an zugfesten Fasern flüssiges Material ausgehärtet wird.

Vor diesem Hintergrund ist es eine Aufgabe der Erfindung, ein verbessertes Verfahren zur Ummantelung eines Strangguts mit einem Mantel anzugeben, insbesondere zur Herstellung eines Kabels, sowie eine hierzu geeignete Vorrichtung. Hierbei soll der Mantel möglichst frei gestaltbar sein und gleichzeitig eine möglichst hohe Fertigungsgeschwindigkeit erzielt werden. Weiterhin sollen ein Kabel mit einem solchen Mantel, ein geeignetes Steuerverfahren für die Vorrichtung sowie ein Computerprogrammprodukt angegeben werden.

Die Aufgabe wird erfindungsgemäß gelöst durch ein Verfahren mit den Merkmalen gemäß Anspruch 1. Vorteilhafte Ausgestaltungen, Weiterbildungen und Varianten sind Gegenstand der Unteransprüche. Die Aufgabe wird weiterhin gelöst durch eine Vorrichtung mit den Merkmalen gemäß Anspruch 14, sowie durch ein Computerprogrammprodukt mit den Merkmalen gemäß Anspruch 15. Dabei gelten die genannten Ausgestaltungen und Vorteile im Zusammenhang mit dem Verfahren sinngemäß auch für die Vorrichtung, sowie das Computerprogrammprodukt und umgekehrt. Bei dem Computerprogrammprodukt handelt es sich um einen physikalischen Datenträger oder auch lediglich um eine Datei, jeweils enthaltend ein ausführbares Programm, das zur automatischen Durchführung des Steuerverfahrens ausgebildet ist, wenn es auf einem Computer installiert ist.

Das Verfahren dient insbesondere zur Herstellung eines Kabels und allgemein zur Ummantelung eines Strangguts. Dabei wird auf das Stranggut ein Mantel aufgebracht und das Stranggut hierzu einer Vorrichtung zugeführt, welche ein Bad aufweist, aus einem aushärtbaren Material, wobei in dem Bad eine Aufbauzone ausgebildet wird, innerhalb welcher das aushärtbare Material zumindest teilweise mittels zumindest einer Belichtungsquelle ausgehärtet wird und durch welche hindurch das Stranggut längsweise in einer Förderrichtung gefördert wird, sodass ausgehärtetes Material an dem Stranggut angeordnet wird und als Mantel an dem Stranggut mit diesem zusammen aus dem Bad herausgefördert wird.

Unter einem Stranggut wird allgemein ein langgestrecktes, insbesondere flexibles Element verstanden, welches ein Trägermaterial bzw. einen Träger für den Mantel bildet. Beispielsweise ist das Stranggut als Kabel oder auch als Teilstruktur eines Kabels, beispielsweise eine Kabelseele, ein oder mehrere Leiter oder ein oder mehrere Adern ausgebildet. Ferner wird unter einem Stranggut ein Kabel verstanden, welches zum Verbinden des Kabels mit einem anderen Gerät, bereits ein Verbindungselement, beispielsweise einen Stecker aufweisen kann. Unter dem Begriff "Ummantelung" oder "Mantel" wird ein wenigstens teilweise stattfindender Materialauftrag, insbesondere ein abschnittsweise oder unvollständiger Materialauftrag, eine teilweise Ummantelung oder auch eine vollständige Ummantelung verstanden. Unter dem Begriff "Bad" wird im Wesentlichen ein liquides Medium verstanden.

Der Erfindung liegt insbesondere die Beobachtung zugrunde, dass mittels des in der US 2015/0097316 A1 genannten Verfahrens eine hohe Fertigungsgeschwindigkeit erzielbar ist und somit grundsätzlich eine wirtschaftlich sinnvolle Herstellung großer Längen im Bereich mehrerer Meter oder sogar Kilometer möglich ist. Ein Kerngedanke besteht nun insbesondere darin, dieses Verfahren nicht lediglich zur Herstellung einzelner, eigenständiger Strukturen zu verwenden, sondern stattdessen ein Halbzeug zuzuführen, auf welches eine solche Struktur aufgetragen wird. Das Halbzeug in Kombination mit der darauf aufgebrachten Struktur bildet dann den fertigen Gegenstand oder seinerseits wieder ein Halbzeug für ein weiteres Verfahren. In Kombination mit der Möglichkeit einer Endlosfertigung und einer hohen Fertigungsgeschwindigkeit ist dann besonders die erfindungsgemäße Ummantelung eines Strangguts als Halbzeug mit einem Mantel als aufgebrachte Struktur vorteilhaft. Das hier vorgestellte Verfahren ermöglicht somit einerseits eine besonders hohe Gestaltbarkeit und Designfreiheit bei der Ausbildung des Mantels, bei einer gleichzeitig wirtschaftlichen Fertigungsgeschwindigkeit, die zudem auch die Herstellung großer Mengen ermöglicht, was besonders im Zusammenhang mit Kabeln von Vorteil ist.

Bei dem erfindungsgemäßen Verfahren wird der Mantel also sukzessive aus dem aushärtbaren Material aufgebaut, indem dieses in der Aufbauzone ausgehärtet wird, während das Stranggut durch das Bad gefördert wird. Dadurch wächst dann in Förderrichtung der Mantel entlang des Strangguts, wird also in einer Längsrichtung des Strangguts auf dieses aufgetragen oder auch angefügt. In diesem Sinne bestehen gewisse Ähnlichkeiten zu einem Extrusionsverfahren, nämlich insofern, als dass ein zunächst flüssiges oder viskoses Material an das Stranggut herangebracht und dort ausgehärtet wird. Im Gegensatz zu einem Extrusionsverfahren erfolgen jedoch Formgebung und Aushärtung des Mantels gleichzeitig, nämlich durch die Belichtung mittels der Belichtungsquelle. Die Formgebung erfolgt zudem nicht durch eine physische Raumbegrenzung mittels einer Apertur wie in einem Extrusionskopf, sondern durch gezieltes Belichten und Aushärten lediglich in den gewünschten Bereichen der Aufbauzone mittels eines von der Belichtungsquelle erzeugten Belichtungsmusters. Außerdem wird ein Extruder zur Materialzuführung nicht benötigt, stattdessen wird das Material für den Mantel über das Bad bereitgestellt. Die gleichzeitige Formgebung und Aushärtung steht auch im Gegensatz beispielsweise zu einem Auftrag mittels Tauchbad, bei welchem ein Stranggut durch ein Tauchbad geführt und erst anschließend, d.h. nach dem Verlassen des Tauchbads ausgehärtet wird.

Insgesamt ist somit das erfindungsgemäße Verfahren auch in gewisser Weise vergleichbar mit einem lithographischen Verfahren, wobei vorteilhaft jedoch kein diskreter, schichtweiser Aufbau des Mantels erfolgt, sondern ein kontinuierlicher oder zumindest quasi-kontinuierlicher Aufbau in Förderrichtung. Das Stranggut wird also insbesondere kontinuierlich durch das Bad und durch die Aufbauzone gefördert. Aufgrund der insbesondere kontinuierlichen Auftragsweise des Mantels und dessen freier Gestaltbarkeit beim Anfügen wird das Verfahren auch als additive Extrusion bezeichnet.

Vorteilhafterweise wird der Mantel als strukturierte Ummantelung ausgebildet. Aufgrund des besonders flexiblen Verfahrens und insbesondere des weiten Gestaltungsspielraums bei der Belichtung lassen sich nahezu beliebig komplexe Strukturen als Mantel für das Stranggut fertigen, auch gerade solche Strukturen, die mit herkömmlichen Verfahren, beispielsweise Extrusions-, Spritzguss- oder Exjection-Verfahren nicht herstellbar sind. Der Mantel als eine dreidimensionale Ummantelung oder Beschichtung ist dann beispielsweise hinsichtlich Funktionalität und/oder visueller Anmutung frei gestaltbar; auch Hinterschnitte und komplexe Funktionen sind auf einfache Weise und mit geringem Fertigungsaufwand darstellbar. Insbesondere eignet sich das Verfahren sowohl zur Massen- oder Serienfertigung als auch zur Einzelstück- oder Prototypenfertigung.

Zum Aushärten wird das aushärtbare Material belichtet. Die Art der Belichtung ist dabei vom gewählten Material abhängig. In einer geeigneten Ausführungsform ist das Material durch Belichtung mit UV-Strahlen aushärtbar, insbesondere polymerisierbar, d.h. vernetzbar. Alternativ ist auch die Verwendung anderer elektromagnetischer Strahlung denkbar, wie beispielsweise Röntgenstrahlung oder Mikrowellenstrahlung. Vorzugsweise ist das aushärtbare Material kontinuierlich aushärtbar, sodass durch Einstellen der Dauer und der Intensität der Belichtung die Härte des Materials, d.h. der Grad der Vernetzung eingestellt wird und auf diese Weise der Mantel je nach Belichtung mit unterschiedlichen insbesondere mechanischen Eigenschaften ausgebildet wird.

Generell wird das Material nur in solchen Bereichen ausgehärtet, in denen das Material belichtet wird. Durch Wahl eines geeigneten Belichtungsmusters, welches von der Belichtungsquelle bereitgestellt wird, lassen sich dann nahezu beliebige Strukturen und Querschnittsgeometrien des Mantels erzeugen. Die Belichtungsquelle ist beispielsweise ein Projektor, welcher das Belichtungsmuster in das Bad hinein projiziert. Alternativ ist auch eine Kombination aus einem Leuchtmittel, beispielsweise einer Leuchte oder einem Lichtleiter und einer Maskierung oder Abbildungsoptik als Belichtungsquelle denkbar. Die Belichtungsquelle kann zudem auch Umlenkelemente, beispielsweise Spiegel aufweisen, um die Strahlung auf einem geeigneten Wege in das Bad zu führen. Auch ein oder mehrere Laser oder Laserscanner sind grundsätzlich als Belichtungsquelle geeignet.

In vorteilhafter Weise wird der Mantel als Struktur insbesondere schichtlos, d.h. kontinuierlich auf dem Stranggut aufgetragen, wodurch die Haftung des Materials am Stranggut deutlich verbessert ist. Das Verfahren ist zudem vollständig automatisierbar und ist auch als in-line-Prozess in einem übergeordneten Fertigungsverfahren einsetzbar. Das Verfahren lässt sich zudem besonders einfach weiterbilden und an verschiedenste Fertigungsprozess und Fertigungsansprüche anpassen. In einer Ausgestaltung wird das Verfahren zudem mehrfach hintereinander angewandt, sodass ein mittels des Verfahrens ummanteltes Stranggut erneut dem Verfahren zugeführt wird, um einen weiteren Mantel auszubilden und auf diese Weise einen Gesamtmantel zu fertigen, welcher eine besonders hohe Gestaltbarkeit aufweist.

Das Verfahren ermöglicht auf vorteilhafte Weise die Ausbildung sowohl symmetrischer als auch asymmetrischer, dreidimensionaler Strukturen als Mantel auf einer Oberfläche des Strangguts, welches ebenfalls entweder eine symmetrische oder asymmetrische Geometrie, insbesondere Querschnittsgeometrie, bezüglich dessen Längsachse aufweist. Bevorzugt sind Geometrien, welche im Wesentlichen symmetrisch und insbesondere rund sind, beispielsweise wie bei einem Rund-, Stab- oder Litzenleiter oder einer optischen Faser als Stranggut. Denkbar und geeignet sind jedoch beispielsweise auch Flachleiter oder eckige Querschnittsgeometrien oder Kombinationen aus den vorgenannten Möglichkeiten, insbesondere auch Geometrien eines gebündelten Strangguts.

Der Mantel wird wie bereits erwähnt durch insbesondere kontinuierliche Aushärtung in der Aufbauzone auf das Stranggut aufgebracht, d.h. insbesondere an dieses angeformt. Die Aufbauzone wird dabei als ein Teilbereich des Bades ausgebildet, indem in das Bad ein Inhibitor eingebracht wird, welcher in einer Inhibitor-Einströmrichtung einen Inhibitor-Gradienten erzeugt, entlang welchem die Aushärtbarkeit des Materials verringert ist. Diesem Inhibitor-Gradienten wird die Belichtung mittels der Belichtungsquelle derart überlagert, dass sich eine dünne, d.h. etwa 0,01 bis 100 µm dünne Schicht als Aufbauzone ergibt, innerhalb welcher die Konzentration des Inhibitors hinreichend gering ist, um eine Aushärtung zu ermöglichen und innerhalb welcher gleichzeitig die Belichtung hinreichend stark ist, um tatsächlich eine Aushärtung zu bewirken. Durch entsprechendes Einstellen der Zufuhr des Inhibitors in das Bad sowie der Belichtung wird dann die Aufbauzone konkret ausgebildet, d.h. insbesondere werden deren Dicke und Position im Bad eingestellt.

Das Stranggut bildet in einer bevorzugten Ausgestaltung einen Kern eines Kabels. Das Stranggut ist vorzugsweise ein elektrisches oder optisches Übertragungselement und insbesondere ein Leiter oder ein Draht, alternativ insbesondere ein Litzenleiter. Allgemein bildet das Stranggut eine Kabelseele, welche von dem Mantel als ein Kabelmantel umgeben oder umhüllt ist. Dabei ist der Mantel nicht notwendigerweise vollumfänglich oder massiv ausgebildet, sondern weist in einer vorteilhaften Variante vielmehr Ausnehmungen und Unterbrechungen auf, um insbesondere die mechanischen, elektrischen oder andere Eigenschaften des Mantels einzustellen. In einer vorteilhaften Variante weist der Mantel zudem unterschiedliche Längsabschnitte mit unterschiedlichen Eigenschaften auf. Alternativ ist das Stranggut selbst ein Kabel, insbesondere mit einem Mantel, eine Leitung oder eine Ader, welches bzw. welche ummantelt wird. Als Stranggut ist grundsätzlich auch eine optische Faser oder ein Schlauch geeignet.

Bei dem Verfahren wird das Stranggut zweckmäßigerweise über ein geeignetes Aufbewahrungs- und Wiederverwendungsträgersystem zugeführt und nach dem Aufbringen des Mantels aufgenommen. Beispielsweise ist das Stranggut auf einer Trommel gelagert, von welcher das Stranggut abgespult und in das Bad gefördert wird. Nach dem Aushärten wird das ummantelte Stranggut aus dem Bad herausgefördert und dann beispielsweise wieder auf einer weiteren Trommel aufgerollt und gelagert. Je nachdem, wie das zugeführte Stranggut und das Endprodukt, d.h. das ummantelte Stranggut ausgebildet sind, wird alternativ oder in Kombination mit den genannten Trommeln ein Förderband und/oder Auffangbehälter oder - schacht verwendet, um das zuzuführende Stranggut und/oder das ummantelte Stranggut zu lagern. In einer weiteren Alternative wird das ummantelte Stranggut direkt einem Konfektionierungsprozess oder einer anderen Weiterverarbeitung zugeführt.

In einer vorteilhaften Weiterbildung weist das Trägersystem eine Positioniervorrichtung auf, um insbesondere beim Start des Verfahrens, aber insbesondere auch während des Verfahrens, eine optimale Positionierung des Strangguts bezüglich der Aufbauzone einzustellen und zu gewährleisten. Hierzu wird beispielsweise ein Entfernungsmesssystem oder ein Näherungssensor verwendet und allgemein vorzugsweise ein kontaktloses Messverfahren mittels eines kontaktlos arbeitenden Sensors zur Ermittlung der Position des Strangguts.

Weiterhin weist das Trägersystem zweckmäßigerweise ein Steuerungssystem für die Förderung des Strangguts auf, d.h. insbesondere ein Steuerungssystem zum Steuern oder Regeln der Fördergeschwindigkeit. In einer vorteilhaften Ausgestaltung wird die Fördergeschwindigkeit abschnittsweise unterschiedlich eingestellt, um beispielsweise lediglich bestimmte Längsabschnitt des Strangguts mit einem Mantel zu versehen und andere Längsabschnitte auszulassen. Diejenigen Längsabschnitte ohne Mantel werden dann entsprechend schneller gefördert. Denkbar und geeignet ist generell auch eine Umkehr der Förderrichtung, beispielsweise um einen bestimmten Längsabschnitt mehrmals durch die Aufbauzone zu führen.

In dem Bad sind im Betrieb regelmäßig mehrere Zonen ausgebildet, nämlich eine Totzone oder nicht-aushärtbare Zone, in welcher der Inhibitor mit einer solchen Konzentration vorliegt, dass ein Aushärten des Materials verhindert wird, eine Normalzone oder aushärtbare Zone, in welcher das aushärtbare Material durch Belichtung aushärtbar ist, und die Aufbauzone, welche im Grenzbereich zwischen der Totzone und der Normalzone angeordnet ist und in welcher das aushärtbare Material zwecks Aushärtung ortsselektiv belichtet wird. Die Normalzone und die Totzone sind dabei nicht notwendigerweise scharf voneinander abgegrenzt, sondern vielmehr durch die inhomogene Verteilung und Konzentration des Inhibitors im Bad definiert. Die Aufbauzone ist dann maßgeblich durch eine bestimmte Konzentration des Inhibitors definiert sowie durch die Belichtung mittels der Belichtungsquelle.

Das Bad wird regelmäßig in einem Behälter gelagert, welcher in einer bevorzugten Ausgestaltung eine Öffnung aufweist, durch welche hindurch das Stranggut dem Bad zugeführt wird. Der Behälter ist hierbei beispielsweise eine flache Wanne oder Schale, mit einem Boden und einer seitlichen Umrandung, welche einen offenen Hohlraum bilden, in welchen das aushärtbare Material zur Bildung des Bades gefördert wird. Die Zuführung des aushärtbaren Materials erfolgt beispielsweise über einen geeigneten Container mit einem geeigneten Auslauf zum Behälter oder Anschluss an den Behälter. Um dann das Stranggut in das Bad einführen zu können, weist der Behälter eine Öffnung auf, welche insbesondere in gefülltem Zustand des Bades von diesem verdeckt wird, sodass also das Stranggut beim Einlaufen in den Behälter direkt in das Bad gefördert wird. Insbesondere ist die Öffnung in den Boden des Behälters eingebracht, sodass die Förderrichtung in einer Variante im Wesentlichen senkrecht zum Boden und zu einer Erstreckungsebene des insbesondere flachen Bades gefördert wird. Dadurch wird der Weg durch das Bad bis zur Aufbauzone besonders kurz gehalten.

Vorteilhafterweise wird das Stranggut in gleicher Richtung, nämlich in Förderrichtung, durch die Öffnung und durch die Aufbauzone gefördert. Die Öffnung ist insbesondere an die Querschnittskontur des Strangguts angepasst, sodass möglichst wenig von dem noch flüssigen, aushärtbaren Material durch die Öffnung verloren geht.

Alternativ ist auch eine Ausgestaltung ohne Öffnung zweckmäßig, bei welcher das Stranggut über einen geeigneten Umlenkmechanismus und insbesondere über eine offene Seite oder Oberseite des Behälters in das Bad gefördert wird. In einer einfachen, beispielhaften Ausgestaltung ist am Boden des Behälters eine Umlenkrolle angebracht, sodass das Stranggut dann beispielsweise seitlich schräg in das Bad einläuft und zunächst die Normalzone durchläuft, dann in der Totzone umgelenkt wird und schließlich von unten her das Bad und die Aufbauzone durchläuft.

Vorteilhafterweise ist an der Öffnung ein Führungselement angeordnet, durch welches hindurch oder allgemein mittels dessen das Stranggut in das Bad hinein gefördert wird und mittels dessen der Behälter im Bereich der Öffnung abgedichtet wird. Das Führungselement dient somit insbesondere dem Ausgleich eines Unterschieds zwischen einem Durchmesser der Strangguts und einem Durchmesser der Öffnung und verhindert die Ausbildung eines Lecks, über welches das Material potentiell austreten könnte. Das Führungselement ist somit in einer Variante zugleich eine Dichtung oder erfüllt zumindest eine Dichtungsfunktion.

Vorteilhafterweise weist das Führungselement eine Membran und/oder eine Führungshülse und/oder ein Ventil und/oder eine Klappe auf. In einer Variante besteht das Führungselement aus einem dieser Elemente. Insbesondere ist das Führungselement flexibel, insbesondere derart, dass sich dieses an eine möglicherweise in Längsrichtung verändernde Umfangskontur des Strangguts anpasst, um eine möglichst optimale Abdichtung zu erzielen. In einer ersten Variante ist das Führungselement eine Führungshülse, ein insbesondere starres Führungsrohr oder ein insbesondere biegeflexibler Führungsschlauch oder weist eine solche, ein solches bzw. einen solchen auf. Ein derartiges Führungselement erstreckt sich vorzugsweise lediglich durch den Behälter bis zum Beginn des Bades, d.h. gerade nicht in das Bad hinein. In einer zweiten Variante ist das Führungselement eine Membran oder weist eine solche auf, wobei das Stranggut dann durch die Membran hindurch gefördert wird und die Membran dann automatisch bündig an der Oberfläche des Strangguts anliegt und die Öffnung abdichtet. In einer dritten Variante ist das Führungselement ein Ventil oder weist ein solches auf, wobei das Ventil zweckmäßigerweise nach Art eines Rückschlagventils oder einer Herzklappe ausgebildet ist und ein Durchlaufen insbesondere in lediglich einer Richtung, nämlich der Förderrichtung ermöglicht. In einer vierten Variante ist das Führungselement eine Klappe oder weist eine solche auf. Die Klappe verschließt die Öffnung, falls kein Stranggut durch die Öffnung gefördert wird und öffnet entsprechend, wenn das Stranggut eingeführt wird. Weitere geeignete Varianten des Führungselements ergeben sich durch Kombination der oben genannten Varianten. Besonders geeignet ist beispielsweise eine Kombination einer fest am Behälter angebrachten Führungshülse mit einer Membran oder einer herzklappenähnlichen Membran.

Zwischen dem Stranggut und dem Führungselement ist möglicherweise ein Zwischenraum ausgebildet, in welchem vorteilhafterweise mittels eines Stützmediums ein Staudruck aufgebaut wird, zum Zurückhalten des aushärtbaren Materials. Diese Ausgestaltung eignet sich besonders in Kombination mit der oben beschriebenen Führungshülse. Auf der dem Bad abgewandten Seite des Behälters, d.h. von außen wird das Stützmedium in das Führungselement eingeströmt und bildet somit einen Gegendruck aus, welcher ein Vordringen des flüssigen, aushärtbaren Materials durch das Führungselement verhindert. Dabei wird der Staudruck zweckmäßigerweise gerade derart eingestellt, dass das Material zurückgehalten wird und zugleich aber das Stützmedium nicht in das Bad einströmt, also insgesamt ein Kräftegleichgewicht zwischen dem Bad und dem Stützmedium eingestellt ist.

Vorteilhafterweise wird in den Zwischenraum in Förderrichtung ein Gas oder eine Flüssigkeit (liquides Medium) als Stützmedium eingeströmt. Mit anderen Worten: in den Zwischenraum wird in Förderrichtung ein gasförmiges oder liquides Stützmedium eingeströmt. In einer ersten Variante wird als Stützmedium der Inhibitor, d.h. insbesondere Sauerstoff verwendet, in einer zweiten Variante wird ein insbesondere inertes Medium verwendet, welches vorzugsweise nicht mit dem aushärtbaren Material reagiert und/oder das Aushärten nicht beeinflusst. In einer dritten Variante wird ein Medium verwendet, welches zugleich zu einer Vorbehandlung der Oberfläche des Strangguts verwendet wird.

Vorteilhafterweise weist der Behälter eine semipermeable Wandung auf und die Aufbauzone wird ausgebildet, indem durch die Wandung hindurch ein insbesondere gasförmiger Inhibitor, in das Bad eingebracht wird. Die semipermeable Wandung ist insbesondere der Boden des Behälters oder ein Teil davon. Das Bad ist dann als dünne Flüssigkeitsschicht auf der Wandung angeordnet und wird somit von unten mit dem Inhibitor beaufschlagt, sodass ein nach oben hin abnehmender Inhibitor-Gradient ausgebildet wird. Die Totzone ist hierbei entsprechend am Grund des Bades ausgebildet. Insbesondere ist auch die Öffnung in die Wandung eingebracht.

Insbesondere erfolgt auch die Belichtung durch die Wandung hindurch, d.h. die Belichtungsquelle strahlt von außen durch die Wandung in das Bad hinein. Die Belichtung erfolgt dabei vorzugsweise in einer Strahlungsrichtung, welche im Bad in etwa der Richtung des Inhibitor-Gradienten entspricht, d.h. die Strahlen werden vorzugsweise senkrecht durch die Wandung eingestrahlt, um insbesondere einen Versatz aufgrund von Brechung in der Wandung zu vermeiden. Die Belichtung erfolgt zweckmäßigerweise in Förderrichtung oder alternativ schräg dazu. Grundsätzlich ist auch eine bezüglich der Wandung schräge Einstrahlung denkbar und geeignet, bei welcher der Versatz bei der Positionierung und Ausrichtung der Belichtungsquelle und/oder der Auslegung des Belichtungsmusters zweckmäßigerweise berücksichtigt wird. Generell wird jedoch die Strahlung bei der Propagation durch das Bad üblicherweise abgeschwächt, sodass ein möglichst kurzer Weg bis zur gewünschten Aufbauzone bevorzugt ist. Insbesondere ist es notwendig, die Strahlung über die Totzone in das Bad einzustrahlen, um eine möglichst dünne Aufbauzone zu erhalten, da bei einer entgegengesetzten Belichtung die Strahlung zunächst in der Normalzone ungewollt viel Material aushärten würde. Bei Einstrahlung über die Totzone wird jedoch eine anfängliche Aushärtung durch den Inhibitor verhindert; eine Aushärtung hinter der Aufbauzone ist dann insbesondere dadurch verhindert, dass dort dann die Strahlung aufgrund der Propagation durch das Bad hinreichend abgeschwächt ist.

In einer möglichen Ausgestaltung verläuft die Wandung im Wesentlichen flach und senkrecht zur Förderrichtung. In einer vorteilhaften Alternative verläuft die Wandung jedoch schräg zur Förderrichtung, d.h. nicht senkrecht und nicht parallel dazu, sondern insbesondere in einem Winkel zwischen etwa 30 und 60 °. Dabei ist hier insbesondere die Förderrichtung im Bereich der Aufbauzone gemeint. Vorzugsweise erfolgt hierbei die Belichtung im Wesentlichen senkrecht zur Wandung, d.h. dann entsprechend schräg zur Förderrichtung. Mit anderen Worten: das aushärtbare Material wird vorzugsweise ausgehärtet, indem dieses durch die Wandung hindurch und schräg zur Förderrichtung mittels der Belichtungsquelle belichtet wird. Alternativ erfolgt lediglich die Belichtung schräg zur Förderrichtung. Diesen Ausgestaltungen liegt insbesondere der Gedanke zugrunde, dass das Stranggut und/oder das Führungselement möglicherweise zu einer nachteiligen Abschattung der Belichtungsquelle führt und gerade im kritischen Bereich an der Oberfläche des Strangguts unter Umständen keine optimale Belichtung und somit Aushärtung des Materials möglich ist. Dem wird durch die bezüglich der Förderrichtung schräge Belichtung abgeholfen, sodass dann die Belichtungsquelle gerade nicht in Richtung der Förderrichtung und der Längsachse des Strangguts ausgerichtet, sondern vielmehr seitlich bezüglich des Strangguts. Um dann wie oben bereits erwähnt den Weg der Strahlung durch das Material möglichst kurz zu halten, wird auch die Wandung zweckmäßigerweise schräg bezüglich des Strangguts und der Förderrichtung angeordnet.

In einer geeigneten Ausgestaltung verläuft die Wandung senkrecht zur Förderrichtung und die Belichtungsquelle ist außermittig bezüglich des Strangguts angeordnet. Unter "außermittig" wird insbesondere verstanden, dass die Belichtungsquelle eine bestimmte Ausdehnung und Abmessung aufweist, mit einem Mittelpunkt, welcher nicht entlang der Längsachse des Strangguts angeordnet ist, in radialer Richtung versetzt hierzu. Alternativ oder zusätzlich ist die Belichtungsquelle schräg angeordnet, weist als eine Strahlrichtung auf, welche nicht parallel zur Förderrichtung ist.

Vorteilhafterweise verläuft die Wandung bezüglich der Förderrichtung rotationssymmetrisch, insbesondere entlang einer Kegelmantelfläche, und bildet eine Spitze, durch welche hindurch das Stranggut in das Bad gefördert wird. Dabei sind insbesondere auch die Öffnung und ggf. das Führungselement an der Spitze angeordnet oder bilden diese. Die Wandung schließt dann einen entsprechend rotationssymmetrischen Hohlraum ein, in welchem das Bad angeordnet ist. Über die Wandung, d.h. die Mantelfläche wird dann der Inhibitor eingebracht, sodass sich beispielsweise bei einer kegelmantelförmigen Wandung auch eine entsprechend kegelmantelförmige Totzone ergibt. Durch entsprechende Belichtung senkrecht zur Wandung ist dann auch die Aufbauzone kegelmantelförmig. Generell folgt die Aufbauzone dem Verlauf der Wandung. Mit der rotationssymmetrischen Ausführung ist zudem auf besonders einfache Weise auch eine bezüglich der Förderrichtung schräge und bezüglich der Wandung insbesondere senkrechte Belichtung durchführbar. Ein weiterer Vorteil ergibt sich insbesondere auch durch die nun bezüglich der Förderrichtung schräge Aufbauzone, wodurch dann der Mantel an einer gegebenen Längenposition des Strangguts nacheinander sozusagen von innen nach außen aufgebaut wird und gerade nicht gleichzeitig wie im Falle einer senkrecht zur Förderrichtung ausgerichteten Aufbauzone. Dadurch wird insbesondere die mechanische Festigkeit des Mantels deutlich verbessert. Alternativ, vorzugsweise aber zusätzlich ist die Belichtungsquelle rotationssymmetrisch bezüglich der Förderrichtung. Die bezüglich der Wandung gemachten Ausführungen gelten sinngemäß auch für die Belichtungsquelle.

Vorteilhafterweise wird das aushärtbare Material von mehreren Belichtungsquellen ausgehend aus unterschiedlichen Richtungen belichtet. Diese Ausgestaltung mit mehreren Belichtungsquellen eignet sich besonders für die oben erwähnte schräge Belichtung, sodass eine Belichtung aus mehreren Richtungen erfolgt, wobei die jeweiligen Belichtungsmuster dann in Summe genau das gewünschte Belichtungsmuster ergeben und jegliche Abschattung insbesondere durch die Überlagerung der Strahlung aus unterschiedlichen Richtungen kompensiert wird.

In einer Variante wird zur Optimierung des Verfahrens ein optisches Sensorsystem mit Rückkopplung verwendet.

Je nach Ausgestaltung weist das Stranggut eine mehr oder weniger komplexe Umfangskontur auf, wobei unter "Umfangskontur" hier insbesondere die Umrandung im Querschnitt senkrecht zur Längsrichtung des Strangguts gemeint ist. Vorzugsweise wird mittels der Belichtungsquelle ein Belichtungsmuster erzeugt, das an die Umfangskontur angepasst wird, sodass eine optimale Aushärtung des aushärtbaren Materials insbesondere an der Oberfläche des Strangguts erfolgt und der Mantel optimal mit dem Stranggut verbunden oder an dieses angebunden ist.

In einer Variante variiert die Umfangskontur entlang des Strangguts und das Belichtungsmuster wird an die variierende Umfangskontur angepasst, während das Stranggut durch das Bad gefördert wird. Dies wird beispielsweise bei einem Projektor als Belichtungsquelle durch abspielen eines entsprechenden Videos erzielt. Allgemein wird also ein zeitlich veränderliches Belichtungsmuster verwendet, welches in Kombination mit der Fördergeschwindigkeit des Strangguts zu einer veränderten Belichtung entlang des Strangguts führt. Denkbar ist hierfür auch die Verwendung einer variierenden Maske oder eines Scanners oder allgemein einer beweglichen Belichtungsquelle.

Von besonderer Bedeutung ist eine Anpassung an die Umfangskontur bei einer Litze oder einem Litzenleiter als Stranggut. Bei diesem sind üblicherweise mehrere Drähte miteinander verdrillt, sodass sich insgesamt eine gewundene oder helixartig profilierte Oberfläche ergibt. Insbesondere in diesem Fall wird das Belichtungsmuster vorteilhafterweise an die Umfangskontur angepasst, indem die Belichtungsquelle relativ zum Stranggut und um die Förderrichtung herum gedreht wird. Dem liegt die Erkenntnis zugrunde, dass bei einer gewunden profilierten Oberfläche bezüglich dieser Oberfläche eine Translation in Längsrichtung äquivalent zu einer Drehung ist. Anstatt nun das Belichtungsmuster fortlaufend zu verändern, um dieses an die sich quasi drehende Umfangskontur anzupassen, wird nun einfach die Belichtungsquelle relativ zur Förderrichtung um das Stranggut herumgedreht und folgt somit der gewundenen Oberfläche, sodass eine ständige Anpassung des Belichtungsmusters zumindest im Bereich der Oberfläche des Strangguts nicht mehr notwendig ist.

Vorteilhafterweise wird der Mantel als ein in Förderrichtung variierender Mantel ausgebildet, indem das aushärtbare Material mit einem Belichtungsmuster belichtet wird, vorzugsweise mit einem zeitlich variierenden Belichtungsmuster. Um einen solchen in Längsrichtung variierenden Mantel auszubilden wird das Belichtungsmuster zweckmäßigerweise zeitlich verändert. Diese Änderung erfolgt insbesondere in Abhängigkeit zur Fördergeschwindigkeit. Die Auflösung des Verfahrens, d.h. der mögliche Detailgrad bei der Ausbildung des Mantels, insbesondere in Längsrichtung, ist hierbei insbesondere von der Wiederholrate der Belichtungsquelle abhängig, d.h. von der Rate, mit welcher eine Änderung des Belichtungsmusters erzeugt wird. Eine höhere Auflösung kann auch durch eine verringerte Fördergeschwindigkeit erzielt werden, im Sinne eines möglichst schnellen Prozesses ist es dann allerdings vorteilhaft, wenn die Belichtungsquelle eine möglichst hohe Wiederholrate aufweist. Die Fördergeschwindigkeit wird zudem von der Aushärtrate maßgebend bestimmt, wobei die Aushärtrate sich wiederum von der eingebrachten (Licht-)Energie beeinflussen lässt.

In einer geeigneten Ausgestaltung wird der Mantel als ein in Förderrichtung variierender Mantel ausgebildet, indem unterschiedlich aushärtbare Materialien verwendet werden. Die unterschiedlichen Materialien härten dann beispielsweise unterschiedlich schnell aus oder weisen nach dem aushärten einen unterschiedlichen Härtegrad auf, sodass der Mantel mit unterschiedlichen Mantelabschnitten ausgebildet ist, welche unterschiedliche Eigenschaften, z.B. unterschiedliche Härten oder Biegeflexibilitäten aufweisen.

Bevor das Stranggut in das Bad gefördert wird, wird das Stranggut vorteilhafterweise in einer Vorbehandlung vorbehandelt und vorzugsweise gesäubert. Allgemein erfolgt in der Vorbehandlung insbesondere eine Vorbereitung der Oberfläche des Strangguts, zur verbesserten Haftung des Materials aus dem Bad beim nachfolgenden Aufbringen und Aushärten. Eine solche Vorbehandlung umfasst dann beispielsweise eine Reinigung der Oberfläche oder das Auftragen eines zusätzlichen Klebstoffs oder einer dreidimensionalen Haft- oder Klebestruktur, um die Anbindung des Materials zu verbessern. Eine verbesserte Anbindung wird dabei insbesondere chemisch, z.B. mittels eines Klebstoffs, und/oder mechanisch, z.B. durch eine zusätzliche Oberflächenstruktur, erzielt. In einer Variante wird in der Vorbehandlung eine Opferstruktur aufgebracht, welche anschließend nach der Ausbildung des Mantels wieder entfernt wird, beispielsweise durch Auflösen. In einer vorteilhaften Ausgestaltung wird das Stranggut in einer Vorbehandlung erwärmt.

Alternativ oder zusätzlich wird das Stranggut in einer Vorbehandlung geeigneterweise durch ein Vorbehandlungsmedium oder ein Vorbehandlungsbad geführt.

In einer zweckmäßigen Weiterbildung wird mittels des Vorbehandlungsmediums oder des Vorbehandlungsbads eine Gleit-, Trenn- oder Ölbeschichtung auf das Stranggut aufgebracht. Hierdurch wird insbesondere eine leichtere Abisolierung für eine spätere Kontaktierung erzielt.

Vorteilhafterweise wird das aushärtbare Material in Förderrichtung und/oder in radialer Richtung abschnittsweise unterschiedlich stark belichtet und ausgehärtet, wodurch mehrere Mantelabschnitte mit unterschiedlichen Eigenschaften ausgebildet werden. Dem liegt die Erkenntnis zugrunde, dass eine unterschiedliche Aushärtung, insbesondere ein unterschiedlicher Vernetzungsgrad des Materials zu unterschiedlichen mechanischen, chemischen, physikalischen und/oder elektrischen Eigenschaften führt, d.h. dass diese Eigenschaften durch eine gesteuerte Aushärtung, d.h. hier eine angepasste Belichtungszeit einstellbar sind. Beispielsweise erfolgt bei längerer Belichtung eine stärkere Vernetzung und der entsprechende Mantelabschnitt ist weniger biegeelastisch, d.h. starrer und insbesondere mechanisch robuster. Ein weniger ausgehärteter Mantelabschnitt ist dann entsprechend biegeelastischer. Die unterschiedlichen Mantelabschnitte können dabei in radialer Richtung, d.h. senkrecht zur Längsrichtung des Strangguts aufeinander angeordnet sein und/oder in Längsrichtung, d.h. hintereinander.

Vorteilhafterweise wird das Stranggut mit dem Mantel nach dem Bad einer Nachbehandlung zugeführt. Dabei wird beispielsweise ein vorher am Stranggut angebrachtes Halteelement entfernt. Alternativ oder zusätzlich wird das ummantelte Stranggut gereinigt. Alternativ oder zusätzlich wird das ummantelte Stranggut konfektioniert, beispielsweise falls der Mantel sich nicht zum Aufrollen auf eine Kabeltrommel eignet.

In einer vorteilhaften Variante variiert die Nachbehandlung abschnittsweise, um mehrere Mantelabschnitte mit unterschiedlichen Eigenschaften auszubilden. In einer geeigneten Ausgestaltung wird eine lediglich abschnittsweise und beispielsweise thermische Behandlung durchgeführt, um den Mantel lediglich abschnittsweise weiter auszuhärten und auf diese Weise mehrere Mantelabschnitte mit unterschiedlicher Biegeelastizität auszubilden. Auch eine nachträgliche, zusätzliche Bestrahlung ist im Rahmen einer Nachbehandlung denkbar.

Vorteilhafterweise besteht das Bad aus mehreren verschiedenen aushärtbaren Materialien, die insbesondere in Förderrichtung geschichtet angeordnet sind, und der Mantel wird abschnittsweise aus unterschiedlichen Materialien ausgebildet, indem die Aufbauzone zeitlich nacheinander in den unterschiedlichen aushärtbaren Materialien ausgebildet wird. Hierzu wird vorteilhaft lediglich ein Behälter benötigt. Die unterschiedlichen Materialien sind darin also insbesondre schichtweise angeordnet.

Durch geeignete Prozessführung, insbesondere Ansteuerung der Lichtquelle und/oder des Inhibitors werden Mantelbereiche mit unterschiedlichen Materialien ausgebildet, wobei das Material des Mantels in radialer Richtung und /oder in axialer Richtung variiert.

Ein Bad mit mehreren verschiedenen Materialien ist auch derart realisierbar, dass zunächst das eine Material entnommen oder abgepumpt wird und dann ein anderes Material eingefüllt wird. Ein Bad mit mehreren Materialschichten ermöglicht jedoch eine deutlich höhere Fertigungsgeschwindigkeit. Durch eine Steuerung der Einbringung des Inhibitors in das Bad wird dann die Aufbauzone insbesondere in Förderrichtung und generell in einer Stapelrichtung der Materialschichten verschoben, verfahren oder versetzt, sodass eines der Materialien zum Aushärten auswählbar ist. In einer beispielhaften Ausführungsform wird dann die Aufbauzone zunächst in eine erste Materialschicht gesetzt, das Stranggut durch das Bad gefördert und ein erster Mantelabschnitt aus einem ersten Material aufgebracht. Danach wird die Aufbauzone in eine zweite Materialschicht verschoben; dabei wird die Förderung des Strangguts ggf. angehalten. Anschließend wird ein zweiter Mantelabschnitt aus einem zweiten Material ausgebildet. Die beiden Mantelabschnitte sind in diesem Beispiel in Längsrichtung hintereinander angeordnet. In einer Variante wird das Stranggut nach der Ausbildung des ersten Mantelabschnitts zurückgefahren und dann der zweite Mantelabschnitt auf dem ersten Mantelabschnitt aufgebracht. Die verschiedenen Materialien unterscheiden sich in ausgehärtetem Zustand beispielsweise hinsichtlich deren mechanischen, elektrischen, chemischen und/oder physikalischen Eigenschaften, sodass dann ein abschnittsweise bedarfsgerecht angepasster Mantel ausgebildet wird. Dies ist beispielsweise bei einem Kabel sinnvoll, welches entlang dessen Längsrichtung verschiedene Umgebungen mit unterschiedlichen Umgebungsbedingungen und Anforderungen an den Mantel durchläuft.

Vorteilhafterweise wird vor dem Aufbringen des Mantels an einer vorgegebenen Längenposition des Strangguts ein Halteelement angebracht, welches als Startpunkt zur Ausbildung des Mantels verwendet wird. Das Halteelement wird auch als Materialführungselement bezeichnet. Dieses Halteelement ist insbesondere lösbar oder auflösbar, z.B. chemisch, und dient vorrangig als Haltepunkt für den Mantel, insbesondere zu Beginn des Verfahrens. Das Halteelement ist dabei beispielsweise eine Platte oder eine Überhangstruktur, welche sich insbesondere im Wesentlichen senkrecht zur Längsrichtung des Strangguts erstreckt und an diesem angebracht, insbesondere befestigt ist. Alternativ ist das Halteelement entlang des Strangguts ausgebildet, entweder durchgängig oder an diskreten, widerkehrenden Längenpositionen. Der Mantel wird dann ausgehend vom Halteelement auf dieses entlang des Strangguts aufgewachsen. Das Halteelement dient somit insbesondere quasi dem Herausziehen des Mantels aus dem Bad und der zusätzlichen mechanischen Unterstützung, falls die Anbindung des Mantels an das Stranggut zu Beginn noch nicht ausreichend ist. Entsprechend sind die Größe und die Struktur des Halteelements geeigneterweise hinsichtlich der Haftung des insbesondere ausgehärteten Materials auf dem Stranggut ausgewählt. Zweckmäßigerweise ist das Halteelement als Opferstruktur konzipiert und wird nach der Fertigung des Mantels entfernt.

Nachfolgend werden Ausführungsbeispiele der Erfindung anhand einer Zeichnung näher erläutert. Darin zeigen jeweils schematisch:
- Fig. 1: eine Vorrichtung zur Ummantelung eines Strangguts,
- Fig. 2: eine alternative Vorrichtung zur Ummantelung eines Strangguts,
- Fig. 3: eine alternative Vorrichtung zur Ummantelung eines Strangguts, und
- Fig. 4a, 4b: jeweils einen Verfahrensschritt zur Ummantelung des Strangguts mit unterschiedlichen Materialien.

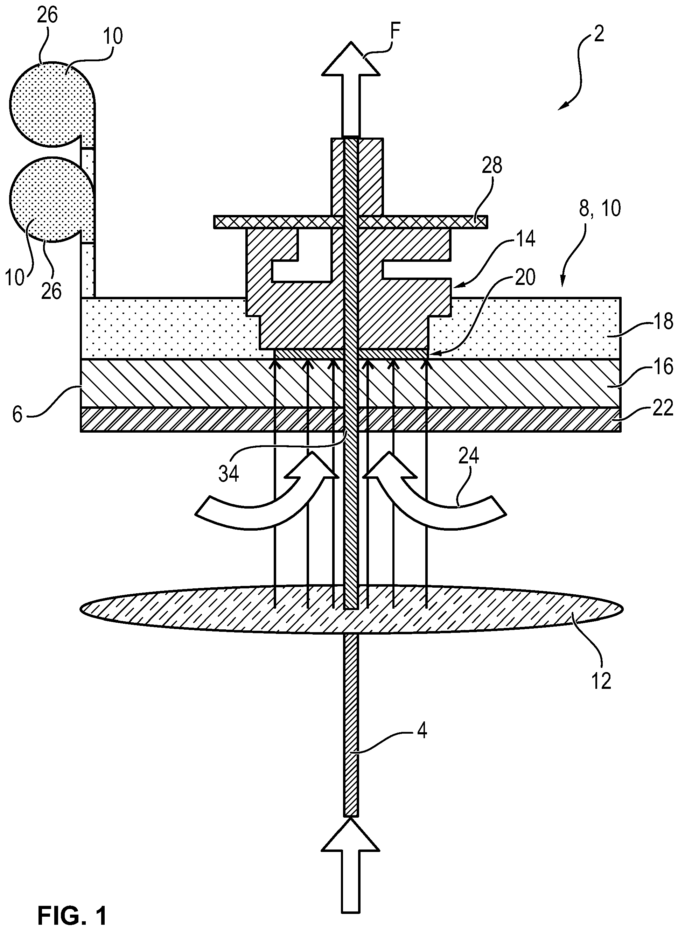

In Fig. 1 ist stark schematisiert eine Vorrichtung 2 zur Ummantelung eines Strangguts 4 dargestellt. Das Stranggut 4 ist beispielsweise ein elektrischer Leiter. Die Vorrichtung weist einen Behälter 6 auf, in welchem ein Bad 8 aus einem aushärtbaren Material 10 angeordnet ist, welches durch eine Belichtungsquelle 12 ausgehärtet und als ein Mantel 14 am Stranggut 4 angeordnet wird. Das hier angewendete Verfahren zeichnet sich insbesondere dadurch aus, dass dieses kontinuierlich ist, d.h. der Mantel 14 wird kontinuierlich ausgebildet und ausgehend von dem Bad 8 in einer Förderrichtung F in Richtung einer Längsachse des Strangguts 4 sukzessive aufgebaut.

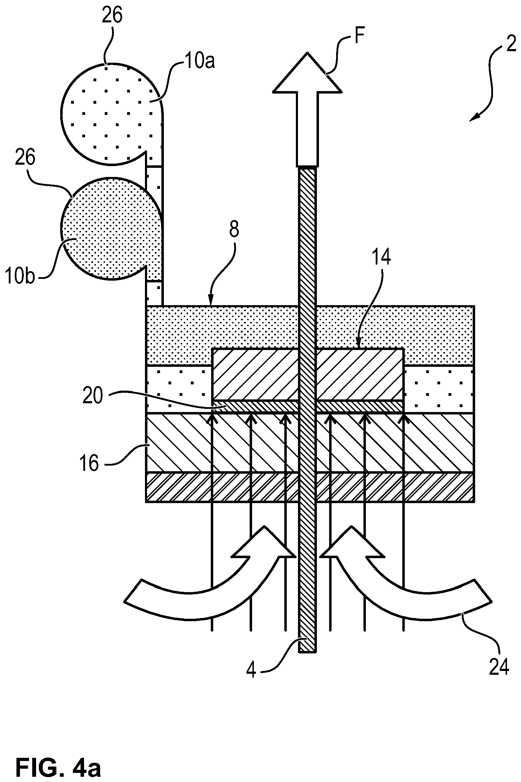

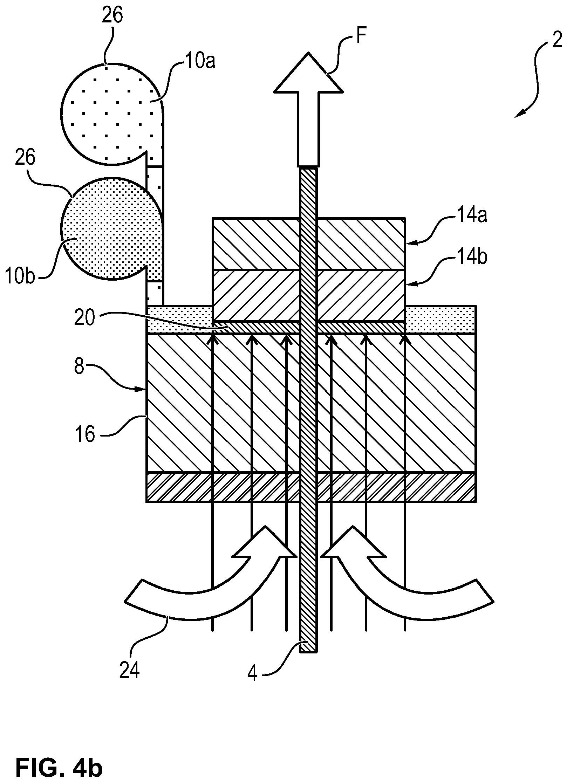

Zur Ausbildung des Mantels 14 sind in dem Bad 8 unterschiedliche Zonen 16, 18, 20 ausgebildet, nämlich eine Totzone 16 oder nicht-aushärtbare Zone, eine Normalzone 18 oder aushärtbare Zone, in welcher das aushärtbare Material 10 durch Belichtung aushärtbar ist, und eine Aufbauzone 20, welche im Grenzbereich zwischen der Totzone 16 und der Normalzone 18 angeordnet ist und in welcher das aushärtbare Material 10 zwecks Aushärtung ortsselektiv selektiv belichtet wird. In der Totzone 16 erfolgt trotz Belichtung keine Aushärtung, da in das Bad 8 über eine semipermeable Wandung 22 ein Inhibitor 24 eingeströmt wird, hier Sauerstoff, welcher ein Aushärten verhindert. Dabei wird hier in Förderrichtung F ein Inhibitor-Gradient ausgebildet, sodass die Konzentration des Inhibitors 24 von der Wandung 22 ausgehend abnimmt und ab einer bestimmten Entfernung eine Aushärtung möglich ist. Dies definiert die Aufbauzone 20. Die Normalzone 18 und die Totzone 16 sind dabei nicht notwendigerweise scharf voneinander abgegrenzt, sondern vielmehr durch die inhomogene Verteilung und Konzentration des Inhibitors 24 im Bad 8 definiert. Die Aufbauzone 20 ist dann maßgeblich durch eine bestimmte Konzentration des Inhibitors 24 definiert sowie durch die Belichtung mittels der Belichtungsquelle 12. Die Belichtung erfolgt in Fig. 1 ebenfalls in Förderrichtung F. Das Material 10 wird aus Containern 26 dem Bad 8 zugeführt. Aus den dargestellten Containern 26 können auch zwei unterschiedliche Materialien zugeführt und beispielsweise miteinander vermischt werden oder für einen Schichtaufbau aus unterschiedlichen Materialien herangezogen werden, wie dies zu Fig. 4a, 4b beschrieben ist.

Das Stranggut 4 wird in Förderrichtung F längsweise durch das Bad 8 gefördert. Gleichzeitig erfolgt die Belichtung und dadurch der Aufbau des Mantels 14 innerhalb der Aufbauzone 20. Als Startpunkt für das Aufwachsen des Mantels 14 ist hier an einer festen Längsposition des Strangguts 4 ein Halteelement 28 angebracht, welches anfangs zur mechanischen Stabilisierung des Mantels 14 dient und später im Rahmen einer Nachbehandlung durch Auflösen entfernt wird. Deutlich erkennbar ist in Fig. 1 dass der der Mantel 14 als komplexe dreidimensionale Struktur gefertigt wird. Die Strukturierung des Mantels 14 wird dabei maßgeblich durch die Belichtung bestimmt, genauer gesagt, durch ein Belichtungsmuster, welches von der Belichtungsquelle 12 erzeugt wird. Dieses Belichtungsmuster wird zeitlich und/oder räumlich variiert, wodurch in Kombination mit der Förderung in Förderrichtung F eine nahezu beliebige Struktur als Ummantelung auf dem Stranggut 4 ausgebildet wird.

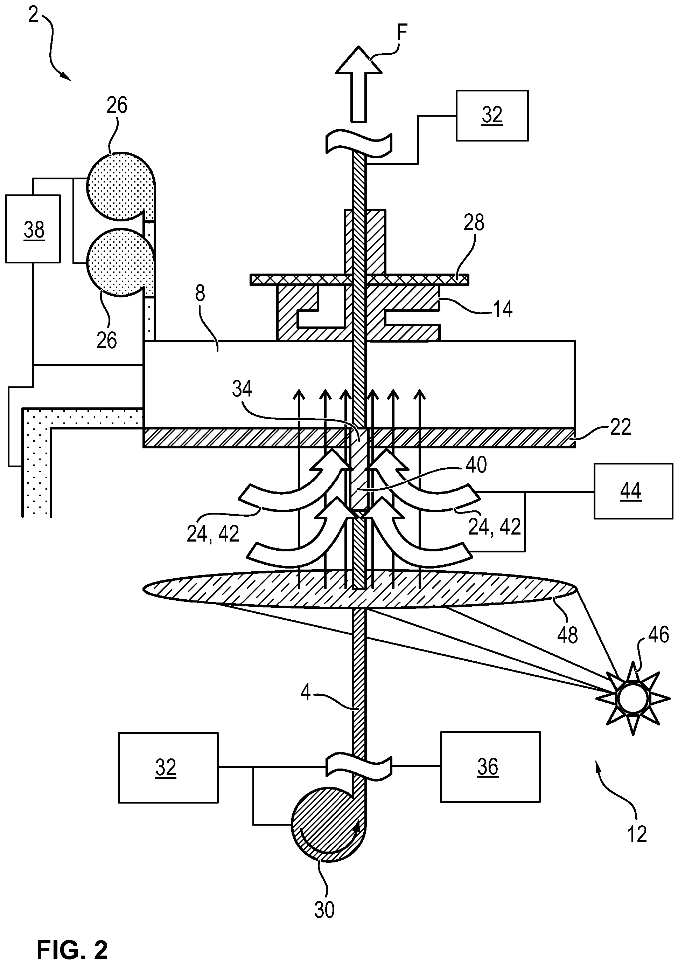

Fig. 2 zeigt eine Variante der Vorrichtung 2, welche hier ein Trägersystem 30 aufweist, mittels dessen das Stranggut 4 zunächst abgerollt und dem Bad 8 zugeführt wird und anschließend nach der Ummantelung einer Nachbehandlung zugeführt wird, beispielsweise zur Reinigung, Konfektionierung oder Ähnlichem. Das Trägersystem 30 weist hierbei eine Steuereinheit 32 auf, zur Steuerung der Fördergeschwindigkeit des Strangguts 4 durch das Bad 8. Die Steuereinheit 32 dient in Fig. 2 insbesondere auch zur Ausrichtung des Strangguts 4 bezüglich einer Öffnung 34, über welche das Stranggut 4 in das Bad 8 geführt wird, mittels eines Entfernungsmesssystems 36. Weiterhin können mittels einer Materialzufuhrsteuerung 38 verschiedene Materialien 10 der Vorrichtung 2 zugeführt werden und dieser auch wieder entnommen werden.

Die Vorrichtung 2 in Fig. 2 weist zudem ein Führungselement 40 auf, mittels welchem das Stranggut 4 durch die Wandung 22 in das Bad 8 geführt wird, wobei das Führungselement 40 zugleich ein Auslaufen des flüssigen, aushärtbaren Materials 10 durch die Öffnung 24 verhindert. Das Führungselement 40 ist in Fig. 2 als Führungshülse ausgebildet und sitzt dicht in der Öffnung 24 ein und erstreckt sich ausgehend vom Grund des Bades 8, d.h. von der Innenseite der Wandung 22 ausgehend nach außen. Beim Austritt aus der Führungshülse tritt das Stranggut 4 demnach zunächst in die Totzone 16 ein, durchläuft diese und erreicht schließlich die Aufbauzone 20.

Um ein Auslaufen des Materials 10 am Stranggut 4 vorbei und durch das Führungselement 40 zu verhindern, wird im Führungselement 40 ein Staudruck ausgebildet, indem in Förderrichtung F ein Stützmedium 42 eingeströmt wird, welches das Material 10 zurückhält. In Fig. 2 wird als Stützmedium 42 der Inhibitor 24 verwendet. Der Staudruck wird über einen Gasdruckregler 44 eingestellt.

Fig. 2 zeigt außerdem eine Alternative zur direkten Beleuchtung der Fig. 1, nämlich eine Belichtungsquelle 12, welche eine Leuchte 46 in Kombination mit einer Maske oder Abbildungsoptik 48 ist.

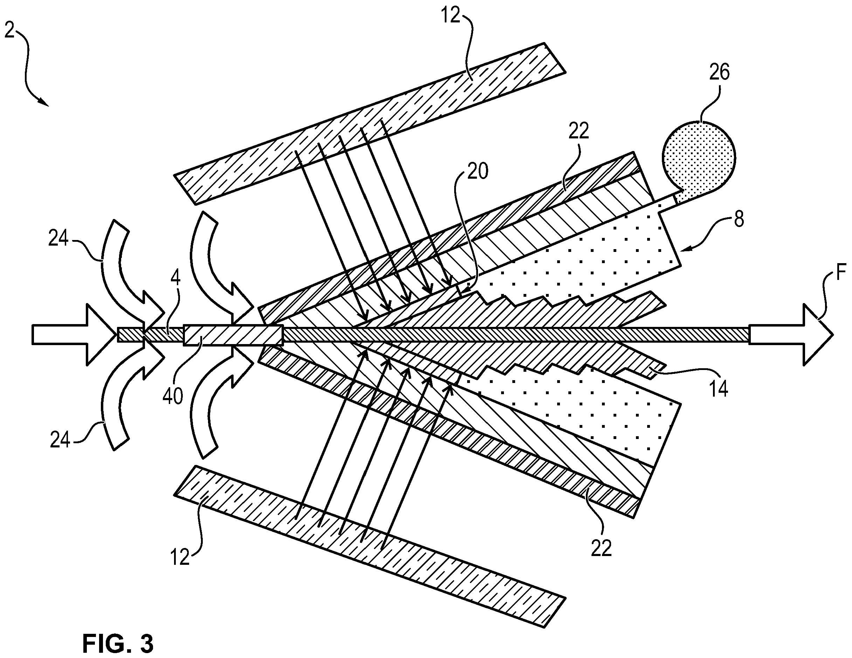

Fig. 3 zeigt eine weitere Variante der Vorrichtung 2, bei welcher die Wandung 22 schräg bezüglich der Förderrichtung F und der Längsachse des Strangguts 4 verläuft. Dabei ist die Wandung 22 rotationssymmetrisch bezüglich der Förderrichtung F angeordnet und bildet eine Kegelmantelfläche innerhalb welcher das Bad 8 angeordnet ist. In dieser Ausgestaltung erfolgt zudem eine Belichtung aus mehreren Richtungen und jeweils senkrecht zur Wandung 22, d.h. hier ebenfalls schräg zur Förderrichtung F. Auch der Inhibitor 24 wird über die kegelmantelförmige Wandung 22 eingeströmt, sodass insgesamt auch die Totzone 16 und die Aufbauzone 20 jeweils kegelmantelförmig ausgebildet sind. Dadurch wird das Problem einer möglichen Abschattung der Belichtungsquelle 12 durch das Stranggut 4 und/oder das Führungselement 40 umgangen.

Die Fig. 4a und 4b zeigen jeweils einen Verfahrensschritt bei der Ausbildung eines Mantels 14 mit unterschiedlichen Mantelabschnitten 14a, 14b aus unterschiedlichen Materialien 10a, 10b. Die beiden Materialien 10a, 10b liegen geschichtet vor und bilden gemeinsam das Bad 8. Durch Steuerung der Einströmung des Inhibitors 24 wird dann die Aufbauzone 20 in eine der beiden Schichten verschoben. In Fig. 4a wird daher zunächst ein erster Mantelabschnitt 14a aus dem ersten Material 10a gefertigt, anschließend wird die Totzone 16 vergrößert, d.h. eine vergrößerte Totzone 16 ausgebildet, und dadurch die Aufbauzone 20 in die Schicht aus dem zweiten Material 10b verschoben. Schließlich wird ein zweiter Mantelabschnitt 14b aus dem zweiten Material 10b ausgebildet.

## Patentansprüche

1. Verfahren, wobei auf ein Stranggut (4) ein Mantel (14) aufgebracht wird und das Stranggut (4) hierzu einer Vorrichtung (2) zugeführt wird, welche ein Bad (8) aufweist, aus einem aushärtbaren Material (10), wobei in dem Bad (8) eine Aufbauzone (20) ausgebildet wird, innerhalb welcher das aushärtbare Material (10) zumindest teilweise mittels zumindest einer Belichtungsquelle (12) ausgehärtet wird,
**dadurch gekennzeichnet, dass** das Stranggut (4) durch das Bad (8) und durch die Aufbauzone (20) hindurch in einer Förderrichtung (F) gefördert wird, sodass ausgehärtetes Material an dem Stranggut (4) angeordnet wird und als Mantel (14) an dem Stranggut (4) mit diesem zusammen aus dem Bad (8) herausgefördert wird.

2. Verfahren nach dem vorhergehenden Anspruch,
**dadurch gekennzeichnet,**
**dass** das Bad (8) in einem Behälter (6) gelagert wird, welcher eine. Öffnung (34) aufweist, durch welche hindurch das Stranggut (4) dem Bad (8) zugeführt wird, wobei das Stranggut (4) vorzugsweise in gleicher Richtung, nämlich in Förderrichtung (F), durch die Öffnung (34) und durch die Aufbauzone (20) gefördert wird.

3. Verfahren nach dem vorhergehenden Anspruch,
**dadurch gekennzeichnet,**
**dass** an der Öffnung (34) ein Führungselement (40) angeordnet ist, durch welches hindurch das Stranggut (4) in das Bad (8) hinein gefördert wird und mittels dessen der Behälter (6) im Bereich der Öffnung (34) abgedichtet wird, wobei das Führungselement (40) vorzugsweise eine Membran und/oder eine Führungshülse und/oder ein Ventil und/oder eine Klappe aufweist.

4. Verfahren nach dem vorhergehenden Anspruch,
**dadurch gekennzeichnet,**
**dass** zwischen dem Stranggut (4) und dem Führungselement (40) ein Zwischenraum ausgebildet ist, in welchem mittels eines Stützmediums (42) ein Staudruck aufgebaut wird, zum Zurückhalten des aushärtbaren Materials (10), wobei in den Zwischenraum in Förderrichtung (F) vorzugsweise ein gasförmiges oder liquides Stützmedium (42) eingeströmt wird.

5. Verfahren nach einem der vorhergehenden Ansprüche,
**dadurch gekennzeichnet,**
**dass** der Behälter (6) eine semipermeable Wandung (22) aufweist und die Aufbauzone (20) ausgebildet wird, indem durch die Wandung hindurch ein Inhibitor (24) in das Bad (8) eingebracht wird,
und
**dass** das aushärtbare Material (10) vorzugsweise ausgehärtet wird, indem dieses durch die Wandung (22) hindurch und schräg zur Förderrichtung (F) mittels der Belichtungsquelle (12) belichtet wird.

6. Verfahren nach dem vorhergehenden Anspruch,
**dadurch gekennzeichnet,**
**dass** die Wandung (22) schräg zur Förderrichtung (F) verläuft, wobei vorzugsweise die Wandung (22) bezüglich der Förderrichtung (F) rotationssymmetrisch verläuft, insbesondere entlang einer Kegelmantelfläche, und eine Spitze bildet, durch welche hindurch das Stranggut (4) in das Bad (8) gefördert wird
oder
**dass** die Wandung (22) senkrecht zur Förderrichtung (F) verläuft und dass die Belichtungsquelle (12) außermittig oder schräg bezüglich des Strangguts (4) angeordnet ist.

7. Verfahren nach einem der vorhergehenden Ansprüche,
**dadurch gekennzeichnet,**
**dass** das Stranggut (4) eine Umfangskontur aufweist, die insbesondere nicht kreisförmig ist, wobei mittels der Belichtungsquelle (12) und/oder einer einschiebbaren Maskierung ein Belichtungsmuster erzeugt wird, das an die Umfangskontur angepasst wird,
und vorzugsweise,
**dass** die Umfangskontur entlang des Strangguts (4) variiert und das Belichtungsmuster an die variierende Umfangskontur angepasst wird, während das Stranggut (4) durch das Bad (8) gefördert wird, und/oder
**dass** das Belichtungsmuster an die Umfangskontur angepasst wird, indem die Belichtungsquelle (12) relativ zum Stranggut (4) und um die Förderrichtung (F) herum gedreht wird.

8. Verfahren nach einem der vorhergehenden Ansprüche,
**dadurch gekennzeichnet,**
**dass** der Mantel (14) als ein in Förderrichtung (F) variierender Mantel ausgebildet wird, indem das aushärtbare Material (10) mit einem Belichtungsmuster belichtet wird, vorzugsweise mit einem zeitlich variierenden Belichtungsmuster,
und/oder
**dass** der Mantel (14) als ein in Förderrichtung (F) variierender Mantel ausgebildet wird, indem unterschiedlich aushärtbare Materialien (10) verwendet werden.

9. Verfahren nach einem der vorhergehenden Ansprüche,
**dadurch gekennzeichnet,**
**dass** das Stranggut (4) in einer Vorbehandlung durch ein Vorbehandlungsmedium oder ein Vorbehandlungsbad geführt wird, wobei mittels des Vorbehandlungsmediums oder des Vorbehandlungsbads vorzugsweise eine Gleit-, Trenn- oder Ölbeschichtung auf das Stranggut (4) aufgebracht wird.

10. Verfahren nach einem der vorhergehenden Ansprüche,
**dadurch gekennzeichnet,**
**dass** das aushärtbare Material (10) in Förderrichtung (F) und/oder in radialer Richtung abschnittsweise unterschiedlich stark belichtet und ausgehärtet wird und dadurch mehrere Mantelabschnitte mit unterschiedlichen Eigenschaften ausgebildet werden,
und/oder
**dass** das Stranggut (4) mit dem Mantel (14) nach dem Bad (8) einer Nachbehandlung zugeführt wird, welche abschnittsweise variiert, um mehrere Mantelabschnitte mit unterschiedlichen Eigenschaften auszubilden.

11. Verfahren nach einem der vorhergehenden Ansprüche,
**dadurch gekennzeichnet,**
**dass** das Bad (8) aus mehreren aushärtbaren Materialien (10) besteht, die insbesondere in Förderrichtung (F) geschichtet angeordnet sind, und dass der Mantel (14) abschnittsweise aus unterschiedlichen Materialien ausgebildet wird, indem die Aufbauzone (20) zeitlich nacheinander in den unterschiedlichen aushärtbaren Materialien (10) ausgebildet wird.

12. Verfahren nach einem der vorhergehenden Ansprüche,
**dadurch gekennzeichnet,**
**dass** vor dem Aufbringen des Mantels (14) an einer vorgegebenen Längenposition des Strangguts (4) ein Halteelement (28) angebracht wird,
und/oder
**dass** der Mantel (14) als strukturierte und/oder glatte Ummantelung ausgebildet wird.

13. Verfahren nach einem der Ansprüche 1 bis 12,
welches zur Herstellung eines Kabels dient und wobei das Stranggut (4) einen Kern des Kabels bildet oder selbst ein Kabel ist

14. Vorrichtung (2) für ein Verfahren nach einem der Ansprüche 1 bis 13,
- mit einem Behälter (6), in welchem das Bad (8) aus dem aushärtbaren Material (10) angeordnet ist, wobei in dem Bad (8) die Aufbauzone (20) ausgebildet ist,
- mit einer Öffnung (34), zur Zufuhr des Strangguts (4) in das Bad (8), wobei an der Öffnung (34) ein Führungselement (40) angeordnet ist, durch welches hindurch das Stranggut (4) in das Bad (8) hinein gefördert wird und mittels dessen der Behälter (6) im Bereich der Öffnung (34) abgedichtet wird, oder
- mit einem Umlenkmechanismus an einem Boden des Behälters (6), zur Förderung des Strangguts (4), und
- mit der Belichtungsquelle (12), zum Aushärten des aushärtbaren Materials (10) innerhalb der Aufbauzone (20).

15. Computerprogrammprodukt enthaltend ein ausführbares Programm, das bei einer Installation auf einem Computer ein Steuerverfahren für eine Vorrichtung (2) nach dem vorhergehenden Anspruch automatisch ausführt, wobei bei dem Steuerverfahren die Belichtungsquelle (12) angesteuert wird, um den Mantel (14) mit mehreren unterschiedlichen Mantelabschnitten innerhalb der Aufbauzone (20) auszubilden, wobei das Stranggut (4) einen Kern eines Kabels bildet oder selbst ein Kabel ist.

## Claims

1. Method wherein a jacket (14) is applied to a product (4) in strand form and the product (4) in strand form to this end is fed to an apparatus (2) which has a bath (8) of a curable material (10), wherein a build-up zone (20) within which the curable material (10) is cured at least partially by means of at least one exposure source (12) is configured in the bath (8),
**characterized in that**
the product (4) in strand form is conveyed in a conveying direction (F) through the bath (8) and through the build-up zone (20) such that cured material is disposed on the product (4) in strand form and as the jacket (14) on the product (4) in strand form is conveyed conjointly with the latter out of the bath (8).

2. Method according to the preceding claim,
**characterized in that**
the bath (8) is mounted in a vessel (6) which has an opening (34) through which the product (4) in strand form is fed to the bath (8), wherein the product (4) in strand form is preferably conveyed in the same direction, specifically in the conveying direction (F), through the opening (34) and through the build-up zone (20).

3. Method according to the preceding claim,
**characterized in that**
a guide element (40) through which the product (4) in strand form is conveyed into the bath (8) and by means of which the vessel (6) in the region of the opening (34) is sealed is disposed on the opening (34), wherein the guide element (40) preferably has a diaphragm and/or a guide sleeve and/or a valve and/or a flap.

4. Method according to the preceding claim,
**characterized in that**
an intermediate space in which a backpressure for retaining the curable material (10) is built up by means of a support medium (42) is configured between the product (4) in strand form and the guide element (40), wherein a gaseous or liquid support medium (42) is preferably streamed in the conveying direction (F) into the intermediate space.

5. Method according to one of the preceding claims,
**characterized in that**
the vessel (6) has a semi-permeable wall (22) and the build-up zone (20) is configured **in that** an inhibitor (24) is introduced through the wall into the bath (8), and **in that**
the curable material (10) is preferably cured **in that** said curable material (10) by means of the exposure source (12) is exposed through the wall (22) and obliquely to the conveying direction (F).

6. Method according to the preceding claim,
**characterized in that**
the wall (22) runs obliquely to the conveying direction (F), wherein the wall (22) preferably runs in a rotationally symmetrical manner in relation to the conveying direction (F), in particular along a conical shell surface, and forms a tip through which the product (4) in strand form is conveyed into the bath (8), or **in that**
the wall (22) runs perpendicularly to the conveying direction (F), and **in that** the exposure source (12) is disposed so as to be eccentric or oblique in relation to the product (4) in strand form.

7. Method according to one of the preceding claims,
**characterized in that**
the product (4) in strand form has a circumferential contour which in particular is not circular, wherein an exposure pattern which is adapted to the circumferential contour is generated by means of the exposure source (12) and/or of a slide-in mask, and preferably **in that** the circumferential contour varies along the product (4) in strand form and the exposure pattern is adapted to the variable circumferential contour while the product (4) in strand form is conveyed through the bath (8), and/or **in that** the exposure pattern is adapted to the circumferential contour **in that** the exposure source (12) is rotated relative to the product (4) in strand form and about the conveying direction (F) .

8. Method according to one of the preceding claims,
**characterized in that**
the jacket (14) is configured as a jacket that is variable in the conveying direction (F) **in that** the curable material (10) is exposed by way of an exposure pattern, preferably by way of a temporally variable exposure pattern, and/or **in that**
the jacket (14) is configured as a jacket that is variable in the conveying direction (F) **in that** dissimilarly curable materials (10) are used.

9. Method according to one of the preceding claims,
**characterized in that**
the product (4) in strand form in a pre-treatment is guided through a pre-treatment medium or a pre-treatment bath, wherein a slide, release, or oil coating is preferably applied to the product (4) in strand form by means of the pre-treatment medium or the pre-treatment bath.

10. Method according to one of the preceding claims,
**characterized in that**
the curable material (10) in portions is exposed and cured to dissimilar degrees in the conveying direction (F) and/or in the radial direction and on account thereof a plurality of jacket portions having dissimilar properties are configured, and/or **in that**
the product (4) in strand form, having the jacket (14), after the bath (8) is fed to a posttreatment which varies in portions so as to configure a plurality of jacket portions having dissimilar properties.

11. Method according to one of the preceding claims,
**characterized in that**
the bath (8) is composed of a plurality of curable materials (10) which in particular are disposed so as to be layered in the conveying direction (F), and **in that** the jacket (14) is configured in portions from dissimilar materials **in that** the build-up zone (20) is configured in a temporally sequential manner in the dissimilar curable materials (10).

12. Method according to one of the preceding claims,
**characterized in that**,
prior to the application of the jacket (14), a holding element (28) is attached at a predefined longitudinal position of the product (4) in strand form, and/or **in that** the jacket (14) is configured as a structured and/or smooth sheathing.

13. Method according to one of Claims 1 to 12,
said method serving for producing a cable, and wherein the product (4) in strand form forms a core of the cable or per se is a cable.

14. Apparatus (2) for a method according to one of Claims 1 to 13,
- having a vessel (6) in which the bath (8) of the curable material (10) is disposed, wherein the build-up zone (20) is configured in the bath (8);
- having an opening (34) for feeding the product (4) in strand form into the bath (8), wherein a guide element (40) through which the product (4) in strand form is conveyed into the bath (8) and by means of which the vessel (6) in the region of the opening (34) is sealed is disposed on the opening (34); or
- having a deflection mechanism for conveying the product (4) in strand form on a base of the vessel (6); and
- having the exposure source (12) for curing the curable material (10) within the build-up zone (20).

15. Computer program product containing an executable program which when installed on a computer automatically executes a control method for an apparatus (2) according to the preceding claim, wherein in the control method the exposure source (12) is actuated so as to configure within the build-up zone (20) the jacket (14) having a plurality of dissimilar jacket portions, wherein the product (4) in strand form forms a core of a cable or per se is a cable.

## Revendications

1. Procédé d'application d'une gaine (14) sur un produit en barre (4) et d'acheminement du produit en barre (4) à un dispositif associé (2), comportant un bain (8), à partir d'un matériau durcissable (10), une zone d'accumulation (20) étant formée dans le bain (8), dans laquelle le matériau durcissable (10) est durci au moins partiellement au moyen d'au moins une source (12) d'exposition à la lumière,
**caractérisé en ce que**
le produit en barre (4) est acheminé à travers le bain (8) et à travers la zone d'accumulation (20) dans une direction de transport (F) de sorte que le matériau durci soit disposé sur le produit en barre (4) et soit évacué du bain (8) conjointement avec le produit en barre sous la forme d'une gaine (14) placée sur le produit en barre (4).

2. Procédé selon la revendication précédente,
**caractérisé en ce que**
le bain (8) est stocké dans un récipient (6) qui comporte une ouverture (34) par laquelle le produit en barre (4) est acheminé au bain (8), le produit en barre (4) étant transporté de préférence dans la même direction, à savoir dans la direction de transport (F), par l'ouverture (34) et à travers la zone d'accumulation (20).

3. Procédé selon la revendication précédente,
**caractérisé en ce que**
un élément de guidage (40) est disposé au niveau de l'ouverture (34), lequel élément de guidage permet de transporter le produit en barre (4) jusque dans le bain (8) et et de rendre le récipient (6) étanche au niveau de l'ouverture (34), l'élément de guidage (40) comprenant de préférence une membrane et/ou un manchon de guidage et/ou une valve et/ou un volet.

4. Procédé selon la revendication précédente,
**caractérisé en ce que**
un espace intermédiaire est ménagé entre le produit en barre (4) et l'élément de guidage (40), espace intermédiaire dans lequel une contre-pression est établie au moyen d'un milieu de support (42) pour retenir le matériau durcissable (10), un milieu de support gazeux ou liquide (42), de préférence, s'écoulant jusque dans l'espace intermédiaire dans la direction de transport (F).

5. Procédé selon l'une des revendications précédentes,
**caractérisé en ce que**
le récipient (6) comporte une paroi semi-perméable (22) et que la zone d'accumulation (20) est formée par introduction d'un inhibiteur (24) dans le bain (8) à travers la paroi,
et **en ce que**
le matériau durcissable (10) est de préférence durci par exposition à la lumière, à travers la paroi (22) et obliquement par rapport à la direction de transport (F), au moyen de la source (12) d'exposition à la lumière.

6. Procédé selon la revendication précédente,
**caractérisé en ce que**
la paroi (22) s'étend obliquement par rapport à la direction de transport (F), la paroi (22) étant de préférence à symétrie de rotation par rapport à la direction de transport (F), en particulier le long d'une surface d'enveloppe de cône, et formant un sommet à travers lequel le produit en barre (4) est transporté jusque dans le bain (8)
ou **en ce que**
la paroi (22) s'étend perpendiculairement à la direction de transport (F) et la source (12) d'exposition à la lumière est disposée de manière excentrée ou oblique par rapport au produit en barre (4).

7. Procédé selon l'une des revendications précédentes,
**caractérisé en ce que**
le produit en barre (4) présente un contour périphérique, notamment non circulaire, un motif d'exposition à la lumière, adapté au contour périphérique, étant généré au moyen de la source (12) d'exposition à la lumière et/ou d'un masquage insérable,
et de préférence **en ce que**
le contour périphérique varie le long du produit en barre (4) et le motif d'exposition à la lumière est adapté au contour périphérique variable pendant que le produit en barre (4) est transporté à travers le bain (8),
et/ou **en ce que**
le motif d'exposition à la lumière est adapté au contour périphérique par rotation de la source (12) d'exposition à la lumière par rapport au produit en barre (4) et autour de la direction de transport (F).

8. Procédé selon l'une des revendications précédentes,
**caractérisé en ce que**
la gaine (14) est conçue comme une gaine variant dans la direction de transport (F) par exposition du matériau durcissable (10) à un motif d'exposition à la lumière, de préférence un motif d'exposition à la lumière variant dans le temps,
et/ou **en ce que**
la gaine (14) est conçue sous la forme d'une gaine variant dans la direction de transport (F) par utilisation de différents matériaux durcissables (10).

9. Procédé selon l'une des revendications précédentes,
**caractérisé en ce que**
le produit en barre (4) est guidé dans un prétraitement à travers un milieu de prétraitement ou un bain de prétraitement, un revêtement anti-adhérent, un revêtement de séparation ou une enduction d'huile étant de préférence appliqué(e) au produit en barre (4) au moyen du milieu de prétraitement ou du bain de prétraitement.

10. Procédé selon l'une des revendications précédentes,
**caractérisé en ce que**
le matériau durcissable (10) est exposé plus ou moins fortement à la lumière et durci dans la direction de transport (F) et/ou dans une direction radiale et une pluralité de parties de gaine sont ainsi formées qui ont des propriétés différentes,
et/ou **en ce que**
le produit en barre (4) pourvu de la gaine (14) est amené après le bain (8) à un post-traitement qui varie par endroits pour former une pluralité de parties de gaine ayant des propriétés différentes.

11. Procédé selon l'une des revendications précédentes,
**caractérisé en ce que**
le bain (8) est formé d'une pluralité de matériaux durcissables (10) qui sont disposés en couches, en particulier dans la direction de transport (F), et **en ce que** la gaine (14) est formée par endroits de matériaux différents par passage de la zone d'assemblage (20) successivement dans le temps dans les différents matériaux durcissables (10).

12. Procédé selon l'une des revendications précédentes,
**caractérisé en ce que**
un élément de retenue (28) est monté à une position prédéterminée sur la longueur du produit en barre (4) avant l'application de la gaine (14) et/ou la gaine (14) est conçue comme une enveloppe structurée et/ou lisse.

13. Procédé selon l'une des revendications 1 à 12,
le procédé servant à fabriquer un câble et le produit en barre (4) formant une âme du câble ou lui-même un câble.

14. Dispositif (2) destiné à un procédé selon l'une des revendications 1 à 13, le dispositif comprenant
- un récipient (6) dans lequel le bain (8) formé du matériau durcissable (10) est disposé, la zone d'accumulation (20) étant formée dans le bain (8),
- une ouverture (34) destinée à amener le produit en barre (4) jusque dans le bain (8), un élément de guidage (40) étant disposé au niveau de l'ouverture (34), l'élément de guidage permettant de transporter le produit en barre (4) jusque dans le bain (8) et de rendre le récipient (6) étanche au niveau de l'ouverture (34), ou
- un mécanisme de déviation situé au fond du récipient (6) et destiné à transporter le produit en barre (4), et
- la source (12) d'exposition à la lumière destinée à durcir le matériau durcissable (10) dans la zone d'accumulation (20).

15. Progiciel comprenant un programme exécutable qui exécute automatiquement, lors de l'installation sur un ordinateur, un procédé de commande d'un dispositif (2) selon la revendication précédente, la source (12) d'exposition à la lumière étant commandée, dans le procédé de commande, pour former la gaine (14) avec une pluralité de parties de gaine différentes à l'intérieur de la zone d'accumulation (20), le produit en barre (4) formant une âme de câble ou étant lui-même un câble.
